# EUROPEAN PATENT APPLICATION

(11) **EP 2 058 222 A1**
(43) Date of publication of application: **13.05.2009**
(21) Application number: 07800703.6
(22) Date of filing: 17.08.2007
(51) Int. Cl.: B63B 35/00, H01L 31/042, F24J 2/00

(54) **SPECIAL PLATFORM FOR GENERATING ELECTRICITY USING SOLAR ENERGY**

(30) Priority: 18.08.2006 CN 200610030184
(71) Applicant: Pan, Ge, Shanghai 200-030 (CN)
(72) Inventor: Pan, Ge, Shanghai 200-030 (CN)
(74) Representative: Schrell, Andreas
(86) International application number: PCT/CN2007/002478
(87) International publication number: WO 2008/025234

(57) **Abstract**

A solar power platform on water is provided, which includes photovoltaic-photothermal solar collectors and an over-water floating platform or an embedded floating platform having a fixing structure. Each of the photovoltaic-photothermal solar collectors has a glass cover tube structure and is equipped with a cooling circulation system. The photovoltaic-photothermal solar collectors are connected and disposed on a surface of a mounting platform higher than a sea wave height and configured into a matrix facing an incident direction of sunlight, and incorporated in and electrically connected to an on-land power grid via a controller/inverter for direct power supply, or electrically connected to a rechargeable battery set for indirect power supply through stored energy. As the solar power platform on water is adopted, the wind load is greatly reduced, the anti-storm performance is greatly improved, and the self weight as well as the construction and maintenance cost are greatly reduced. In addition, the solar power platform on water can be disposed over a water surface of a shallow water area close to coastal districts, so that the power loss on the transmission and transformation cables is reduced, and the solar power platform on water is applicable to a wider range of water areas than the prior art.

## Description

### BACKGROUND OF THE INVENTION

### Field of Invention

The present invention relates to a solar-energy utilization technology, and more particularly to a solar power platform on water.

### Related Art

Most power shortage occurs in underdeveloped remote areas or highly-developed coastal districts all over the world. The power shortage problem in the remote areas may be solved by building independent photovoltaic (PV) power plants, small-sized household roof-mounted PV panels, and medium/small-sized commercial roof-mounted lightweight PV panels and so on. However, in order to solve the power shortage problem in the highly-developed coastal districts or substitute conventional energy sources for power generation with renewable energy sources, a large-scale solar power plant or system is needed. To this end, a technical solution of building a large-scale solar power plant in an area such as a desert with sufficient sunlight has been proposed. However, such a technical solution has the following problems. As the solar power plant in the desert is far away from most of the highly-developed coastal districts, the transmission line loss during the power transmission from the solar power plant is rather high, and the power grid expansion project requires a lot of reconstructions. In addition, as the solar power plant is severely affected by harsh environment factors such as sandstorm and high temperature, the cost for building and maintaining the large-scale solar power plant in the desert is extremely high. Furthermore, suitable conditions for building the large-scale solar power plant in the desert are quite limited.

As for floating platforms with a solar power generation function in the prior art, it is difficult to balance the anti-storm performance and the cost thereof due to structural and technical reasons. In order to improve the anti-storm performance of the floating platform, a huge volume and a heavy weight are generally adopted. For example, CN2616470Y discloses a "Multifunctional Platform". As the multifunctional platform has a huge underwater balance structure and a heavy weight, the profit brought by the solar power generation function is disproportionate to the construction and maintenance cost of the floating platform, and the multifunctional platform can merely be used in deep water areas and thus is rather limited in applications. In addition, in practice, the multifunctional platform cannot achieve the desirable solar power generation efficiency due to the mounting position, disposition direction, and power supply mode of the solar PV power generating device thereof. Therefore, there is a need of a more advanced technology of utilizing a solar power platform on water and transmission.

### SUMMARY OF THE INVENTION

Accordingly, the present invention is directed to a Solar power platform on water, which has a light weight, a high anti-storm performance, a construction and maintenance cost much lower than that of the prior art, and is convenient in repairing and maintenance. The floating platform enables a solar photovoltaic (PV) power generating device to have a high power generation efficiency, to perform direct power supply or indirect power supply through stored energy, to be broadly applied, and to be built over a water surface of a shallow water area close to coastal districts that are short of power.

The present invention is achieved through the following technical solution. The present invention provides a solar power platform on water, which includes an over-water floating platform or an embedded floating platform having a fixing structure, and solar photoelectric-conversion devices. (I) The floating platform includes floating bodies, a platform or deck, and truss connection structures; the platform or deck is fixed to the floating bodies there-below via the truss connection structures to form an integral rigid platform structure that matches with an underwater size thereof and is suitable for being disposed in a water area with a minimum water depth of 0.3 meter-0.8 meter; and the floating platform is disposed above water in an island or peninsula configuration. (2) The solar photoelectric-conversion devices include photovoltaic or photovoltaic-photothermal solar collectors with glass cover tube structures; each of the photovoltaic or photovoltaic-photothermal solar collectors with glass cover tube structures is equipped with a cooling circulation system; the cooling circulation system includes a communicating pipe, a circulating pump, a connecting pipeline, a control device, a plurality of temperature-regulation floating barrel of the floating bodies connected to one another, and a heat-transfer working medium; and the photoelectric-photothermal solar collectors perform a temperature regulation through heat exchanging by using the heat-transfer working medium to circulate through the circulating pump, the connecting pipeline, the control device, and the floating barrel in water. (3) The solar photoelectric-conversion devices are arranged as a matrix facing an incident direction of sunlight and are connected and disposed on a surface of the platform or deck via a mounting bracket, and the solar photoelectric-conversion devices are disposed at a sea level height H of higher than 3 meter. (4) The solar photoelectric-conversion devices are directly incorporated in and electrically connected to an on-land power grid or indirectly incorporated in and electrically connected to the on-land power grid after being connected to a rechargeable battery set, in which the incorporation and electrical connection operations are achieved through a power transmission connection by using submarine safe power transmission cables. The profile of the glass cover tube structure includes an elliptical tube, a circular tube, a rectangular tube, a semi-circular tube, a semi-elliptical tube, a flat triangular tube, and a semi-curved tube formed by one plane and the other curved surfaces. Openings of the glass cover tube structure are enclosed. The glass cover tube structure is provided therein with a solar PV panel and a channel type metal cooling tube A back surface of the PV panel is fixed to the channel type metal cooling tube in a heat conductive manner. Furthermore, a plurality of such glass cover tubes is disposed in parallel and spaced apart from one another, and is in communication with one another via the cooling tube. The heat-conductive fixation between the back surface of the PV panel and the cooling tube is achieved using an electric-insulation and heat-conductive adhesive, and the electric-insulation and heat-conductive adhesive includes a modified epoxy adhesive added with an inorganic nanometer heat-conductive material. The platform or deck is further provided with a wave fence protruding outwards on a periphery thereof, the wave fence is disposed vertically or inclined outwardly, and both the surface of the platform or deck and the wave fence adopt a porous or reticulated water-permeable plate. The over-water floating platform is provided with an automatic sunlight-tracking device. The automatic sunlight-tracking device includes a position detector with sunlight intensity comparison device and a track driving control circuit disposed on the platform or the deck, at least one propeller fixed to the truss connection structures and disposed in water, and a rotation-controlling windlass for controlling fixing tethers. The number of the propeller fixed to the truss connection structures and disposed in water is one or more, in which more than one propeller should be symmetrically distributed around a rotation center and a propelling direction of the propellers is manually controlled or electrically controlled by a direction control device through a program. Rotation-fixing tethers are disposed at the position of the rotation center of the floating platform, and are connected to fixing structures at the underwater ground such as anchor piles. The over-water floating platform has a metal structure, which is provided thereon with lightning arresters connected to the water and acoustic-optic electronic bird-repelling devices. Each floating body of the over-water floating platform includes a floating barrel or a floating barrel and a buoyant block, in which the floating barrel and the buoyant block are composed or combined into a submerged or semi-submerged floating body. The floating barrel of each floating body is an enclosed displacement floating barrel made of a high molecular plastic, metal, cement pre-cast element, or glass fiber reinforced plastic (GFRP), in which the high molecular plastic or GFRP used to make the temperature-regulation floating barrel contains a metallic nanometer heat-conductive particle modifying additive.

The present invention has the following advantages. As the floating platform includes floating bodies, a platform or deck, and truss connection structures, the platform or deck is fixed to the floating bodies there-below via the truss connection structures to form an integral rigid platform structure that matches with an underwater size thereof and is suitable for being disposed in a water area with a minimum water depth of 0.3 meter-0.8 meter, and the floating platform is disposed above water in an island or peninsula configuration, the structure of the present invention has a lighter weight and a much lower construction and maintenance cost, is more convenient in repairing and maintenance, and applicable to a wider range of water areas, as compared with that of the prior art. In addition, as the structure of the present invention can be disposed over a water surface of a shallow water area that is close to coastal districts that are short of power, the power loss on the transmission and transformation cables can be greatly reduced. Furthermore, the solar photoelectric-conversion devices include photovoltaic or photovoltaic-photothermal solar collectors with glass cover tube structures, and each of the photovoltaic or photovoltaic-photothermal solar collectors with glass cover tube structures is equipped with a cooling circulation system, which uses a heat-transfer liquid flow to regulate the temperature, so as to ensure the conversion efficiency of the solar photoelectric-conversion devices as much as possible. As the cooling circulation system uses a plurality of floating barrel of the floating bodies connected to one another and the heat-transfer working medium for heat exchange, the construction and operating cost of the floating platform structure for the floating platform mounted solar power generating device is greatly reduced, and the output performance thereof is stable and reliable. In addition, the solar photoelectric-conversion devices adopt hybrid solar collectors with glass cover tube structures, arranged as a matrix facing an incident direction of sunlight and connected and disposed on a surface of the platform or deck via mounting frame, and the hybrid solar collectors are disposed at a sea level height H of higher than 3 meter. Furthermore, the solar photoelectric-conversion devices are directly incorporated in and electrically connected to an on-land power grid or indirectly incorporated in and electrically connected to the on-land power grid after being connected to a rechargeable battery set, and the incorporation and electrical connection operations are achieved through a power transmission connection by using submarine safe power transmission cables. Thus, the solar PV power generating device with the solar power platform on water of the present invention has high power generation efficiency, and the floating platform has a high anti-storm performance, is capable of performing direct power supply or indirect power supply through stored energy, and provides a safe and reliable power transmission.

As compared with the prior art, the present invention has made the following improvements. Firstly, the present invention adopts the integral rigid floating platform structure including the floating bodies, the platform or deck, and the truss connection structures, and the solar photoelectric-conversion devices adopt the hybrid solar collectors with spaced glass cover tubes, so that the floating platform has a small wind load and a high anti-storm stability, and the self weight and the construction and maintenance cost thereof are greatly reduced, as compared with the prior art. In addition, the solar power platform on water can be disposed over a water surface of a shallow water area with a water depth of 0.3 meter-0.8 meter chose to coastal districts, so that the power loss thereof on the transmission and transformation cables is greatly reduced, and the Solar power platform on water is applicable to a much broader range of water areas than that of the prior art. Secondly, in the present invention, each of the photovoltaic-photothermal solar collectors is equipped with a cooling circulation system, so that the photovoltaic-photothermal solar collectors can be used to perform temperature regulation through a heat-exchanging process by circulating the heat-transfer working medium through the circulating pump, the connecting pipeline, the control device, and the floating barrel in water. Under the same sunlight condition, the solar power generation efficiency of the present invention is higher than that of the prior art by about 25%. Moreover, the construction and operating cost is reduced. In heavy wind and sea wave conditions, the floating barrel can also be filled with water for ballast, so as to increase the stability of the device under stormy weather. Thirdly, in the present invention, the solar photoelectric-conversion devices are arranged as a matrix facing the incident direction of sunlight and are disposed at a sea level height H of higher than 3 meter, so that the adverse effect brought by wind waves is eliminated, and the conditions for receiving the solar energy and the photoelectric-conversion efficiency are more superior to the prior art. Finally, as the charging of the rechargeable battery is a power changing process, a severe loss occurs to the generated electric power; and as the discharging of the rechargeable battery is also a power changing process, the overall output efficiency of the solar photoelectric-conversion devices and the rechargeable battery power supply system in the prior art is greatly reduced. On the contrary, in the present invention, the solar photoelectric-conversion devices are directly incorporated in and electrically connected to the on-land power grid or indirectly incorporated in and electrically connected to the on-land power grid after being connected to the rechargeable battery set when the direct incorporation into the on-land power grid for power supply cannot be achieved, so that the solar power generation efficiency of the power generation mode of being incorporated in the power grid is much higher than that achieved through the stored power by using the rechargeable battery, as compared with the real-time power supply or indirect power supply through the power stored in the rechargeable battery of the solar photoelectric-conversion devices in the prior art. Thus, not only the cost for setting up the solar photoelectric-conversion devices is greatly reduced, but the efficiency problem between the solar power generation and the power supply is also solved in the system level, so that the present invention is more economical than the prior art. Moreover, by analyzing the cost performance ratio between the profit brought by the solar power generation function and the construction cost of the floating platform, it is found that the present invention is much more practical than the prior art.

As compared with the technique of building a solar power plant in the desert in the prior art, the present invention has made the following improvements. The land only covers 29% of the surface of the earth, in which one third of the land area is desert, and the remaining part of the surface of the earth is water, so that the large-scale solar power plant is preferably built above water rather than in the desert when considering the available area, and the construction scale thereof varies depending upon the actual requirements. In addition, when the over-water solar power plant is built near the coastal districts, the traffic and transportation conditions are more favorable than that built in the desert. Moreover, the weather resistance requirement on the materials for building the floating platform mounted solar power generating device is much lower than that on the materials used in the high-temperature environment in the desert, and the natural conditions for air cooling or liquid cooling above water are more favorable than that in the desert. Moreover, through comparison, it is found that the solar power plant built above water is less susceptible to the environmental damage. For example, as the desert moves, the power plant may be buried or crashed; the photoelectric-conversion power generating equipment may be destroyed by sandstorms; the sand blown by wind onto the cover of the power generation elements severely shields off the incident sunlight; it is difficult for the operating and maintenance personnel to live in the deep desert; it is difficult to lay out and maintain cables in non-residential areas; and it is difficult to store the generated electric power, and the line loss during the long-distance power transmission and transformation is rather high. By comparison, it is found that the floating platform mounted solar power generating device is far more superior to the solar power plant built in the desert in terms of technical and economical features.

### BRIEF DESCRIPTION OF THE DRAWINGS

The present invention will become more fully understood from the detailed description given herein below for illustration only, and thus are not limitative of the present invention, and wherein:
FIG.1 is a schematic front view of a solar power platform on water adopting a peninsula-type floating mounting structure according to a first embodiment of the present invention;
FIG.2 is a side view of FIG.1;
FIG.3 is a schematic front view of a solar power platform on water adopting an offshore-island-type embedded fixing mounting structure according to a second embodiment of the present invention;
FIG.4 is a schematic view of a partial structure of a solar power platform on water with an automatic sunlight-tracking device according to an embodiment of the present invention;
FIG.5 is a schematic front view of a solar power platform on water adopting an offshore-island-type floating mounting structure according to a third embodiment of the present invention; and
FIG.6 is a three-dimensional top view of a large-scale solar power platform on water adopting a plurality of offshore-island-type floating mounting structures according to the third embodiment of the present invention.

### DETAILED DESCRIPTION OF THE INVENTION

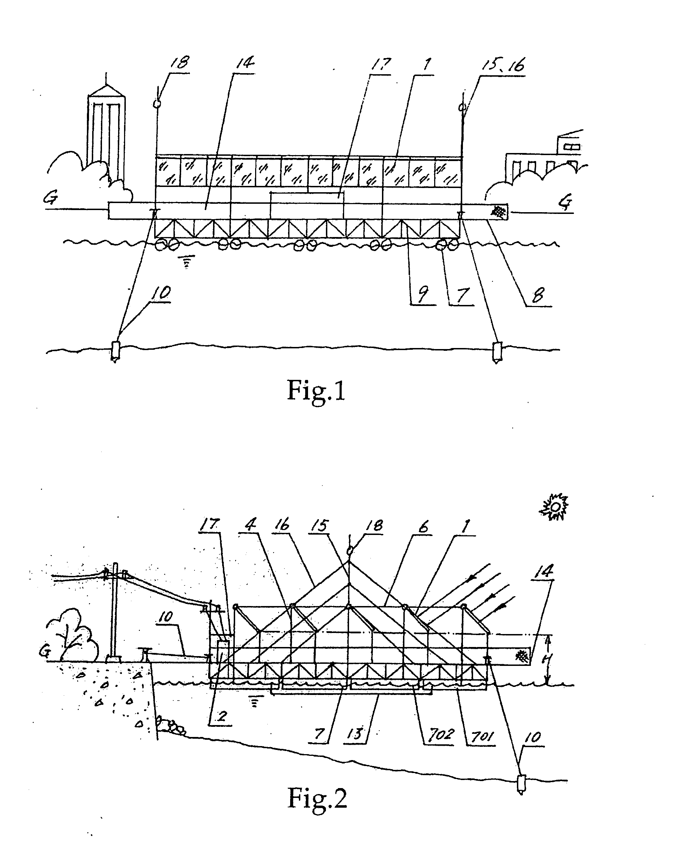

Referring to FIG.1 and FIG.2, a solar power platform on water according to a first embodiment of the present invention adopts a over-water peninsula-type floating platform. The floating platform includes photovoltaic or photovoltaic-photothermal solar collectors 1, a controller/inverter 2, collector mounting frame 4, and a heat-transfer working medium 6 constituting a structure of solar photoelectric-conversion devices, and further includes floating bodies 7, a platform or deck 8, truss connection structures 9, and tethers 10 constituting a structure of an over-water floating platform. Each floating body 7 includes a floating barrel 701 and a buoyant block 702. In addition, the floating platform further includes a collector cooling circulation system 13, a wave fence 14, standing poles 15, draglines 16, an equipment room 17, acoustic-optic electronic bird-repelling devices and lightning arresters 18.

The floating platform includes floating bodies, a platform or deck, and truss connection structures. The platform or deck is fixed to the floating bodies there-below via the truss connection structures to form an integral rigid platform structure that matches with an underwater size thereof and is suitable for being disposed in a water area with a minimum' water depth of 0.3 meter-0.8 meter. The platform or deck is provided with a wave fence protruding outwards on a periphery thereof. In order to further reduce the wave pressure, both a surface of the platform or deck and the wave fence adopt a porous or reticulated water-permeable plate. The solar photoelectric-conversion devices adopt hybrid solar collectors with glass cover tube structures, for example, photovoltaic or photovoltaic-photothermal solar collectors 1 mounted on the collector mounting frame 4. The solar photoelectric-conversion devices are connected and disposed on a surface of the platform or deck via mounting frame, arranged as a matrix facing an incident direction of sunlight, and the hybrid solar collectors are disposed higher than a sea wave height that is lower than a local moderate wave height, that is, the hybrid solar collectors are disposed at a sea level height H of higher than 3 meter. The solar photoelectric-conversion devices are directly incorporated in and electrically connected to an on-land power grid, i.e., directly incorporated in and electrically connected to the on-land power grid via the controller/inverter 2 for direct power supply; or the solar photoelectric-conversion devices are indirectly incorporated in and electrically connected to the on-land power grid after being connected to a rechargeable battery set through the same connection configuration. The incorporation and electrical connection operations are achieved through a power transmission connection by using submarine safe power transmission cables.

The photovoltaic or photovoltaic-photothermal solar collectors are mounted at an inclination angle from 0° to 90°. For example, the photovoltaic or photovoltaic-photothermal solar collectors may be mounted facing the incident direction of sunlight and inclined at an angle of greater than 45° with respect to the horizontal plane in middle/high latitude areas. In addition, in order to further improve the anti-storm stability, the photovoltaic or photovoltaic-photothermal solar collectors may also be mounted facing the incident direction of sunlight and inclined at an angle of 5° with respect to the horizontal plane.

Said photovoltaic or photovoltaic-photothermal solar collectors are two-dimensional or three-dimensional temperature-regulating transparent-tube-type photoelectric-photothermal hybrid solar collectors. A transparent glass cover tube and a heat transferring tube or a heat conduction tube (heat pipe for instance) in each of said transparent-tube-type photovoltaic-photothermal collectors may be a through passed type cover tube or a single passed type cover tube. Each hybrid solar collector with the glass cover tube structure adopts a glass cover tube with its tube ends being enclosed, and the glass cover tube is provided therein with a solar PV panel and a channel type metal cooling tube. A back surface of the PV panel is fixed to the channel type metal cooling tube in a heat-conductive manner. A plurality of such glass cover tubes is disposed in parallel and spaced apart from one another, and is in communication with one another via the cooling tube. The hybrid solar collectors with glass cover tube structures are adopted, no reflecting bottom plate is provided, and the glass cover tubes are disposed in parallel and spaced apart at a certain space, so that the wind load and produced heat are reduced, and the wave pressure under the stormy weather is reduced as well, thereby improving the anti-storm stability of the floating platform. Besides an elliptical tube, a circular tube, and a rectangular tube, a profile of the glass tube further includes a flat-shaped tube such as a semi-circular tube, a semi-elliptical tube, a flat triangular tube, and a semi-curved tube formed by one plane and the other curved surfaces. One plane of a curved tube or flat triangular tube may be disposed facing the incident direction of sunlight. The advantage of using a flat-shaped tube lies in that, with the same working width for receiving sunlight, the dedicated glass material for making the solar glass cover tube can be saved.

The heat-conductive fixation between the back surface of the PV panel and the channel type metal cooling tube includes, for example, a heat-conductive connection using an electric-insulation and heat-conductive adhesive. That is, the channel type metal cooling tube is fixed to the back surface of the PV panel in a heat-conductive manner by using the electric-insulation and heat-conductive adhesive. The adopted electric-insulation and heat-conductive adhesive includes a modified epoxy adhesive added with an inorganic nanometer heat-conductive material.

Said floating platform adopting the integral rigid floating platform structure is an floating platform disposed above water and connected to a land area G in a peninsula configuration. The over-water floating platform includes the floating bodies 7, the platform or deck 8, the truss connection structures 9, and the tethers 10. The platform or deck is fixed to the floating bodies there-below via the truss connection structures and connected to underwater anchor piles or underwater ground by the tethers. Each floating body of the over-water floating platform may be the floating barrel 701, the buoyant block 702, or a semi-submerged floating body combined by the floating barrel 701 and the buoyant block 702. The collector mounting frame are connected to the truss connection structures of the floating platform and disposed on a surface of the mounting platform that is higher than the sea wave height H, for example, a sea level height of 3 meter, and lower than the local moderate wave height. The study shows that, the solar power platform on water of the present invention is configured to match with an underwater size thereof and is suitable for being disposed in a water area with a minimum water depth of 0.3 meter-0.8 meter.

The equipment room 17 is disposed on the platform or deck 8, and includes the controller/inverter 2, a circulating pump, a pipeline control device, and other auxiliary control equipments of the collector cooling circulation system 13 therein. An enclosed displacement floating barrel may be made of a plastic, metal, cement pre-cast element, or glass fiber reinforced plastic (GFRP) and the like. Among a plurality of floating barrel of the floating bodies connected to bottom portions of the truss connection structures, besides the temperature-regulation floating barrel, fluctuating floating barrel and heat-storage floating barrel are also included. The temperature-regulation floating barrel made of a high molecular plastic or GFRP are fabricated by using a heat-exchanging-type high molecular plastic or GFRP modified by a metallic nanometer heat-conductive particle additive, such that the heat transfer and heat exchange properties of the high molecular plastic or GFRP are greatly improved without severely degrading the necessary properties thereof. In addition to the consideration of the heat transfer property of the materials, the temperature-regulation displacement floating barrel may be further made into various shapes to enlarge the contact area of the surfaces of the floating barrel with water, such as a teeth shape, or it may be provided with fins on inner and outer surfaces for promoting the heat transfer effects, so as to further improve the heat exchanging performance.

The fluctuating floating barrels are in communication with the water at the floating platform via a delivery pump and a delivery pipeline. The reserve buoyancy of each fluctuating floating barrel is adjusted by injecting a ballast liquid into an inner chamber of the floating barrel by an anti-capsize water injection equipment of a control device. The floating body may also be a semi-submerged floating body composed of or combined by the floating barrel and the buoyant block, so as to reduce the influence on the floating body caused by sea waves, thereby improving the anti-capsize capability and stability. For example, the inner chambers of some of the floating barrel may be filled with a permanent floating material such as an EPS foam plastic to form composite floating bodies, so as to alleviate the decreasing of the buoyant force due to the water leakage caused by a damage of chamber walls of the floating barrel.

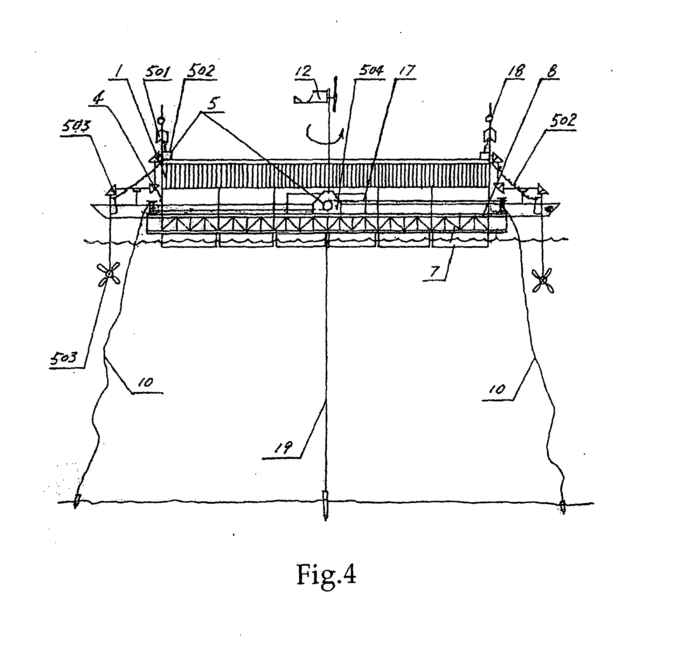

Said heat-storage floating barrel is provided with foamed heat preservation and insulation layer and an inner waterproof isolation layer therein. For example, a foamed heat preservation and insulation layer is disposed along an inner wall of the floating barrel, and then an inner waterproof film layer is further disposed on the heat preservation and insulation layer, so as to isolate a heat-storage liquid from the foamed heat preservation and insulation layer. Referring to FIG.4, the heat-storage floating barrel and the temperature-regulation floating barrel are connected and then disposed in a pipeline of the cooling circulation system. The heat-storage floating barrel and the temperature-regulation floating barrel may be switched by a control valve K to be respectively connected to the pipeline of the cooling circulation system, so as to respectively perform heat dissipation through a cooling process and heat storage through a cooling process. Hot water generated by the heat storage through a cooling process may be further heated and then supplied to the personnel on the floating platform for living or heating, or used for preheating or heating the subsequent seawater desalination equipment.

Each of the photovoltaic or photovoltaic-photothermal solar collectors is equipped with the collector cooling circulation system 13. The collector cooling circulation system 13 includes a communicating pipe of the photovoltaic or photovoltaic-photothermal solar collectors, the circulating pump, a connecting pipeline, a control device, a plurality of temperature-regulation floating barrel of the floating bodies connected to one another, and the heat-transfer working medium 6. The heat-transfer working medium may be an anti-freeze liquid, deionized water, or nanometer heat-transfer fluid, in which the nanometer heat-transfer fluid includes an inorganic nanometer heat-transfer fluid or a composite nanometer heat-transfer fluid. The photovoltaic or photovoltaic-photothermal solar collectors perform a temperature regulation through a heat-exchanging process by circulating the heat-transfer working medium to pass through the circulating pump, the connecting pipeline, the control device that are connected to the temperature-regulation floating barrel in water. The liquid circulation cycle for controlling the temperature regulation is carried out by controlling the turning on and off of the circulating pump using a temperature sensor in the control device. The photovoltaic or photovoltaic-photothermal solar collectors have a desirable operating temperature of 20°C-25°C and an upper limit control temperature of 35°C, so as to maintain the optimal PV output characteristics.

Said over-water floating platform or the embedded floating platform having the fixing structure is both provided with the truss connection structures. In order to further reduce the adverse effects on the structural strength of the rigid floating platform caused by wind waves or sea waves, for example, the effect of an additional bending load caused by the compressive deformation at edge girders of the truss connection structure girders of the floating platform, the standing poles 15 and the draglines 16 may be disposed on the edge girders of the truss connection structure girders of the floating platform. Two ends of each edge girder are connected to the standing poles by symmetrical draglines, and thus each edge girder is supported.

In order to reduce the floating resistance, the floating body shall be disposed in such a way that a length direction thereof is consistent with a progressing direction of the sea waves. A porous or reticulated walk deck is provided along a working aisle on the platform surface for performing maintenance and repairing works, so as to eliminate the pressure caused by sea waves and the lifting load due to the lift force of the air during a rainstorm.

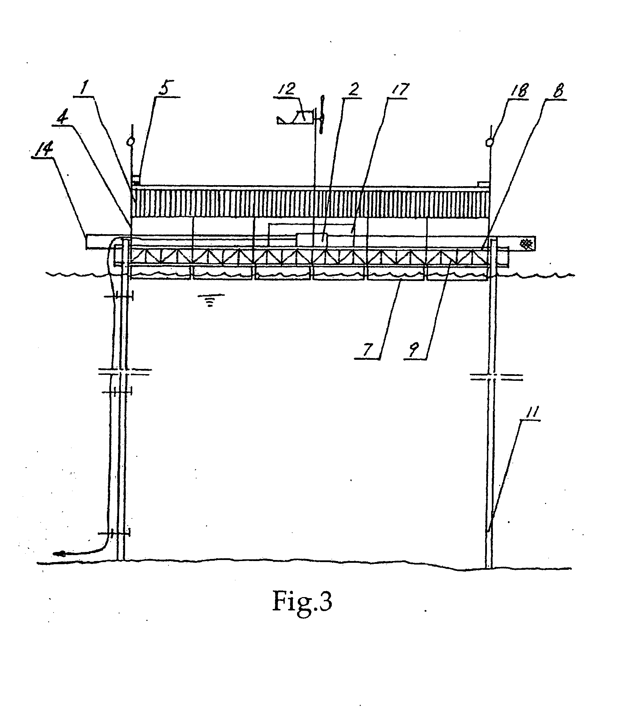

Referring to FIG.3, a solar power platform on water according to a second embodiment of the present invention adopts an embedded island-type floating platform having a fixed structure. The floating platform includes photovoltaic or photovoltaic-photothermal solar collectors 1, a controller/inverter 2, a rechargeable battery set 3, and collector mounting frame 4 constituting a structure of solar photoelectric-conversion devices; and further includes floating bodies 7, a platform or deck 8, truss connection structures 9, and underwater support posts 11 constituting a structure of the embedded floating platform having the fixed structure. Moreover, the floating platform further includes a small wind power generating device 12, a wave fence 14, an equipment room 17, acoustic-optic electronic bird-repelling devices and lightning arresters 18.

Said embedded floating platform having the fixed structure is a rigid floating platform disposed above water in an island configuration with respect to the land areas. The floating bodies 7 adopt a permanent floating body structure, for example, a structure of a semi-submerged floating body composed of a floating barrel and a buoyant block. The embedded floating platform having the fixed structure includes the platform or deck 8, the truss connection structures 9, and the underwater support posts 11. The underwater support posts 11 may adopt a rigid structure, and may be tension-leg hinge support posts. The underwater support posts are directly connected to the underwater ground. As such, an offshore-island-type rigid floating platform is formed.

The equipment room 17 is disposed on the platform or deck 8, and includes the controller/inverter 2, other auxiliary control equipments, as well as auxiliary facilities used in daily life of the personnel on duty. The photovoltaic or photovoltaic-photothermal solar collectors are disposed on a surface of a mounting platform higher than a local wave height H via the collector mounting frame, and connected to the truss connection structures 9 of the floating platform. The photovoltaic or photovoltaic-photothermal solar collectors are configured into a matrix facing an incident direction of sunlight. The photovoltaic or photovoltaic-photothermal solar collectors are connected to one another and then incorporated in and electrically connected to an on-land power grid via the controller/inverter 2 through submarine cables for direct power supply; or perform an automatic detection and switch between the above direct power supply mode and a mode of being further electrically connected to a rechargeable battery set for indirect power supply through stored energy as required. Particularly, when the demand on the power supply is reduced or the direct incorporation into the on-land power grid for power supply cannot be achieved, through automatically switching the connecting states thereof, the photovoltaic or photovoltaic-photothermal solar collectors are electrically connected to the rechargeable battery set and thus a portion of the electric power is stored first, and then the photovoltaic or photovoltaic-photothermal solar collectors are incorporated in and electrically connected to an on-land power grid via the controller/inverter through the submarine cables, in which if a power shortage occurs in a peak period, the stored energy is output for supplementation, thereby alleviating the dynamic power shortage of corresponding power supply districts in the peak period.

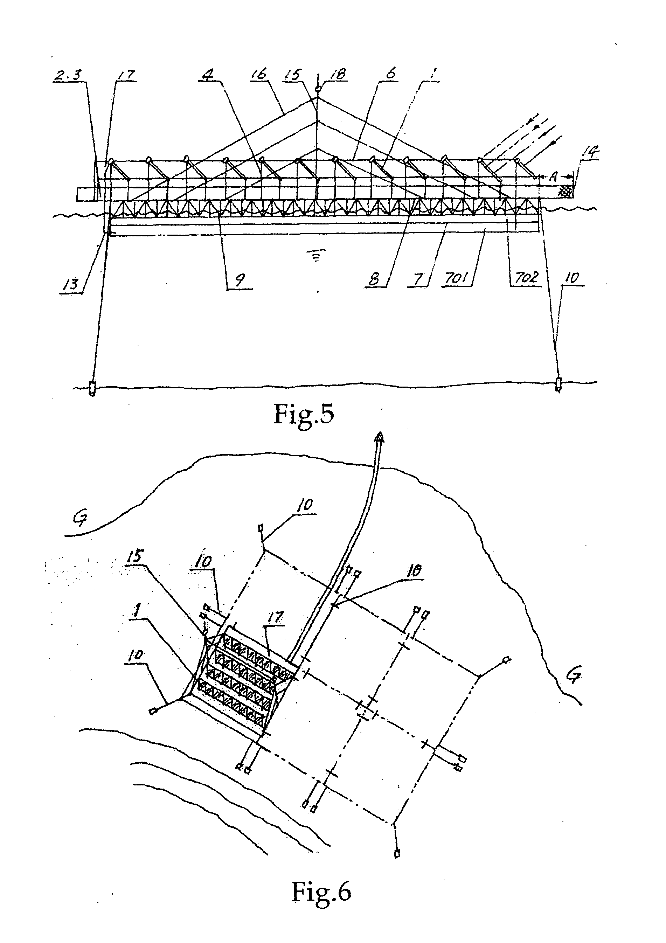

Referring to FIG.5, a solar power platform on water according to a third embodiment of the present invention adopts an island-type floating platform having a floating structure. The floating platform includes photovoltaic or photovoltaic-photothermal solar collectors 1, a controller/inverter 2, a rechargeable battery set 3, collector mounting frame 4, and an automatic sunlight-tracking device 5 constituting a structure of a PV power generation device. The automatic sunlight-tracking device 5 includes a position detector with sunlight intensity comparison device 501, a track driving control circuit 502, a propeller and a direction control device 503, and a rotation-controlling windlass 504 for controlling and fixing tethers. In addition, the floating platform further includes a heat-transfer working medium 6, floating bodies 7, a platform or deck 8, truss connection structures 9, and tethers 10 constituting a structure of an over-water floating platform. Each floating body 7 includes a floating barrel 701 and a buoyant block 702. The floating body is configured as a submerged floating block combined by the floating barrel and the buoyant block. In addition, the floating platform further includes a collector cooling circulation system 13, a wave fence 14, standing poles 15, draglines 16, an equipment room 17, acoustic-optic electronic bird-repelling devices and lightning arresters 18, rotatable fixing tethers 19, and the like.

The floating platform having the floating structure is a rigid floating platform disposed above water in an island configuration with respect to the land areas. Referring to FIG.6, more than one Solar power platform on water disposed above water and configured into an offshore island may be connected to one other by tethers to form a large-scale solar power platform on water, which covers a large area ranging from several hundreds square meters to several square kilometers.

The floating platform having the floating structure includes the floating bodies 7, the platform or deck 8, the truss connection structures 9, and the tethers 10. The platform is fixed to the floating bodies there-below via the truss connection structures and connected to underwater anchor piles by the tethers. Each floating body of the floating platform having the floating structure may be a submerged floating body composed of the floating barrel 701 and the buoyant block 702. For example, the floating body is designed as a submerged floating body composed of a buoyant block at an upper portion and a floating barrel at a lower portion. The floating barrel at the lower portion may be connected with an anti-capsize water injection equipment for injecting the ballast water into the floating barrel to adjust the reserve buoyancy of the floating barrel, or may be connected to the collector cooling circulation system 13 to serve as a temperature-regulation floating barrel. In addition to the cooling effect on the photovoltaic or photovoltaic-photothermal solar collectors generated by the natural wind above water, the floating platform mounted solar power generating device is further equipped with the collector cooling circulation system 13. The heat-transfer working medium may be circulating water or a water-based nanometer heat-transfer fluid, which is used to perform a water-cooling circulation for temperature regulation after being connected to a heat exchange pipe and a communicating pipe of the photovoltaic or photovoltaic-photothermal solar collectors, the circulating pump, the pipeline control device, and some of the floating barrel in water. A temperature regulation control cycle is carried out by controlling the turning on and off of the circulating pump using a temperature sensor in the pipeline control device. In addition, the deionized water may also be used as the heat-transfer working medium, which is circulated through the circulating pump, the control pipeline, and the temperature-regulation floating barrel in water for temperature regulation through the liquid-cooling circulation.

Said island-type floating platform having the floating structure may be equipped with the automatic sunlight-tracking device 5. Referring to FIG.4, the automatic sunlight-tracking device 5 includes a position detector with sunlight intensity comparison device 501 and a track driving control circuit 502 disposed on the platform or deck, a propeller, a direction control device 503, and a rotation-controlling windlass 504 for controlling and fixing tethers 10. The position detector with sunlight intensity comparison device 501 may be disposed in such a way that the light-sensors thereof are configured at an included angle of about 5°-10° with respect to one another. When automatically tracking the sunlight, the position detector with sunlight intensity comparison device detects and compares a light intensity. Once detecting that the angle of the sunlight changes, the position detector with sunlight intensity comparison device sends a track driving electrical signal or optical signal. After receiving the signal, the track driving control circuit sends an execution signal to turn on a starting motor of an engine of the propeller, so as to drive the propeller to start working. The number of the propeller fixed to the truss connection structures and disposed in water is one or more, and more than one propeller should be symmetrically distributed around a rotation center. Rotatable fixing tethers 19 may be further disposed at the position of the rotation center of the floating platform, and connected to fixing structures at the underwater ground such as anchor piles. A propelling direction of the propellers may be manually controlled or electrically controlled by the direction control device through a program. The fixing tethers 10 may be used together with the rotation-controlling windlass. The rotation-controlling windlass 504 includes a winding engine, a pulley set, tethers, and a lock control mechanism. When the fixing tethers are loosened and the propelling direction of the propellers is changed by using the rotation-controlling windlass, the floating platform performs a stationary rotation for sunlight tracking and then restores its initial position under the torque reaction of the water. As such, the automatic sunlight track can perfectly meet the requirements on tracking the angle error with a single axis at the cost of the minimum energy consumption. When the propeller fails, the track driving control circuit 502 may alternatively send an execution signal, which is switched to control the windlass to adjust the releasing and retracting of the fixing tethers 10. Thus, the floating platform is enabled to achieve the sunlight-tracking function through tracking rotation and restoring rotation.

In order to reduce or eliminate the adverse effects on the solar photoelectric-conversion devices mounted on the platform surface caused by the sea waves under stormy weather, reticulated wave fences 14 allowing the wind to pass through and capable of blocking the sea waves may be further provided on a front side and two lateral sides of the platform. In order to further improve the effect of the wave fences, a distance A for the wave fences to extend outwards may be further increased on a surface of the platform or deck where the wave fences are mounted. Besides being disposed vertically, the wave fences may also be disposed inclined outwardly, as shown in FIG.4, so as to further enhance the effect for blocking the sea waves. In order to enhance the bending strength of the truss connection structure girders of the floating platform and reduce the structural material consumption and the cost, the draglines 16 and the standing poles 15 may be disposed on the edge girders of the truss connection structure girders of the floating platform. Two ends of each edge girder are connected to the standing poles by symmetrical draglines, and thus each edge girder is supported.

The solar photoelectric-conversion devices may be three-dimensional photovoltaic-photothermal solar collectors mounted on the collector mounting frame 4. The collector mounting frames are directly connected to the truss connection structures 9. The photovoltaic-photothermal solar collectors are electrically connected to the rechargeable battery set 3 disposed in the equipment room 17 to store the electric power first, and then incorporated in and electrically connected to an on-land power grid via the controller/inverter in the equipment room 17 through the submarine cables. Thus, if necessary, the stored electric power is used as a supplementation for the corresponding power grid when the power shortage occurs in a peak period, thereby alleviating the power shortage of corresponding power supply districts in the peak period.

Moreover, in order to avoid adverse effects caused by bird nests, the acoustic-optic electronic bird-repelling devices may be disposed on the floating platform. The over-water floating platform has a metal structure, which may be provided with the lightning arresters 18 connected to water, and alarm lamps or alarm signal flags for low visibility situations such as night and foggy or rainy weather. Moreover, a small wind power generating device 12 may be further disposed for power generation, which is partially complementary to the solar power plant. Thus, such a solar power platform on water is designed into a solar power platform on water with no personnel on duty.

## Claims

1. A solar power platform on water, comprising an over-water floating platform or an embedded floating platform having a fixing structure and solar photoelectric-conversion devices, wherein
(1) the floating platform comprises floating bodies, a platform or deck, and truss connection structures; the platform or deck is fixed to the floating bodies there-below via the truss connection structures to form an integral rigid platform structure that matches with an underwater size thereof and is suitable for being disposed in a water area with a minimum water depth of 0.3 meter-0.8 meter; and the floating platform is disposed above water in an island or peninsula configuration;
(2) the solar photoelectric-conversion devices comprise photovoltaic or photovoltaic-photothermal solar collectors with glass cover tube structures; each of the photovoltaic or photovoltaic-photothermal solar collectors with glass cover tube structures is equipped with a cooling circulation system; the cooling circulation system comprises a communicating pipe, a circulating pump, a connecting pipeline, a control device, a plurality of temperature-regulation floating barrel of the floating bodies connected to one another, and a heat-transfer working medium; and the photovoltaic-photothermal solar collectors are used to perform a temperature regulation through a heat-exchanging process by circulating the heat-transfer working medium through the circulating pump, the connecting pipeline, the control device, and the floating barrel in water;
(3) the solar photoelectric-conversion devices are arranged as a matrix facing an incident direction of sunlight and are connected and disposed on a surface of the platform or deck via mounting frame, and the solar photoelectric-conversion devices are disposed at a sea level height H of higher than 3 meter; and
(4) The solar photoelectric-conversion devices are directly incorporated in and electrically connected to an on-land power grid or indirectly incorporated in and electrically connected to the on-land power grid after being connected to a rechargeable battery set, and the incorporation and electrical connection operations are achieved through a power transmission connection by using submarine safe power transmission cables.

2. The solar power platform on water according to claim 1, wherein a profile of the glass cover tube structure comprises an elliptical tube, a circular tube, a rectangular tube, a semi-circular tube, a semi-elliptical tube, a flat triangular tube, and a semi-curved tube formed by one plane and the other curved surfaces; with its tube ends being enclosed, the glass cover tube structure is provided therein with a solar photovoltaic (PV) panel and a channel type metal cooling tube; a back surface of the PV panel is fixed to the channel type metal cooling tube in a heat-conductive manner; and a plurality of such glass cover tubes is disposed in parallel and spaced apart from one another, and is in communication with one another via the cooling tube.

3. The solar power platform on water according to claim 2, wherein the heat-conductive fixation between the back surface of the PV panel and the cooling tube comprises a heat-conductive connection by using an electric-insulation and heat-conductive adhesive, and the electric-insulation and heat-conductive adhesive comprises a modified epoxy adhesive added with an inorganic nanometer heat-conductive material.

4. The solar power platform on water according to claim 1, wherein the platform or deck is provided with a wave fence protruding outwards on a periphery thereof, the wave fence is disposed vertically or inclined outwardly, and both a surface of the platform or deck and the wave fence adopt a porous or reticulated water-permeable plate.

5. The solar power platform on water according to claim 1, wherein the over-water floating platform is provided with an automatic sunlight-tracking device, and the automatic sunlight-tracking device comprises a position detector with sunlight intensity comparison device and a track driving control circuit disposed on the platform or deck, a pair of propeller fixed to the truss connection structures and disposed in water, and a rotation-controlling windlass for controlling at least a pair of tether.

6. The solar power platform on water according to claim 5, wherein a number of the propeller fixed to the truss connection structures and disposed in water is one or more, more than one propeller is symmetrically distributed around a rotation center, and a propelling direction of the propellers is manually controlled or electrically controlled by a direction control device through a program.

7. The solar power platform on water according to claim 1, wherein rotatable fixing tethers are disposed at a position of the rotation center of the floating platform, for being connected to fixing structures at an underwater ground such as anchor piles.

8. The solar power platform on water according to claim 1, wherein the over-water floating platform has a metal structure and is provided with lightning arresters connected to water and acoustic-optic electronic bird-repelling devices thereon.

9. The solar power platform on water according to claim 1, wherein each of the floating bodies of the over-water floating platform comprises a floating barrel or a floating barrel and a buoyant block, and the floating barrel and the buoyant block are configured to be composed of or combined into a submerged or semi-submerged floating body.

10. The solar power platform on water according to claim 9, wherein the floating barrel of each of the floating bodies is an enclosed displacement floating barrel made of a high molecular plastic, metal, cement pre-cast element, or glass fiber reinforced plastic (GFRP), and the high molecular plastic or GFRP used to make the temperature-regulation floating barrel contains a metallic nanometer heat-conductive particle modifying additive.
